# EUROPEAN PATENT APPLICATION

(11) **EP 2 006 535 A2**
(43) Date of publication of application: **24.12.2008**
(21) Application number: 06841723.7
(22) Date of filing: 01.12.2006
(51) Int. Cl.: F03D 1/02, F03D 3/02, F03D 1/04, F03D 3/04

(54) **MODULAR WIND POWER GENERATOR**

(30) Priority: 16.12.2005 ES 200503098
(71) Applicant: Plana Querol, Joaquin, 03540 Alicante (ES)
(72) Inventor: Plana Querol, Joaquin, 03540 Alicante (ES)
(74) Representative: Schäfer, Matthias W.
(86) International application number: PCT/ES2006/000671
(87) International publication number: WO 2007/074181

(57) **Abstract**

Modular wind power generator of the type that is used to generate energy from wind, **characterised in that** it is formed by one or more linear groups comprising a plurality of independent wind power generator modules, joined in a coaxial manner, provided with fan-type turbines with an air flow control system in the form of an adjustable pivot gate. According to the invention, the aforementioned modules are actuated by the wind and the rotational movement of each module is transmitted to the next module by means of a connecting piece, such that the energy generated at the end of the device corresponds to the sum of the energies generated by the different modules.

The main advantage of the device is that maximum use is made of the area swept by the wind, with the minimum visual impact, allowing its operation in a horizontal position, a vertical position or in any intermediate position, without limiting wind speed and with the maximum amount of energy being harnessed.

## Description

The present invention relates, as its title indicates, to a modular wind power generator of the type that is used to generate mechanical or electrical energy from wind, characterised in that it is formed by one or several linear groups comprising a plurality of independent wind power generator modules, which are joined in a coaxial manner and which are provided with fan-type turbines, with an air flow control system in the form of an adjustable pivot gate. According to the invention, the aforementioned modules are driven by the wind and the rotational movement of each module is transmitted to the next module by means of a connecting piece, such that the energy generated at the end of the device corresponds to the sum of the energies generated by the different modules.

At the current time a variety of generators that allow energy to be obtained from wind are widely known and used. We find a great number of examples, such as for instance, those described in Patents 200402212 "*Simplified wind power generator*", 98937523 "*Wind power generator"*, 200301174 *"Water-floating wind power generator",* 9902695 *"Wind power generator",* 9701076 *"Wind power generator",* and 8201691 *"Wind power generator with variable orientation shaft*", but all of them have a similar structure based on a tower of a considerable height at the end of which is the rotor, generally with three blades, that has a gearbox associated and, normally, an electric generator.

These devices present a series of problems and drawbacks amongst which we can cite the operating limitations that exist in relation to wind speed, in so far as they are not able to operate at high wind speeds due to the limits of rigidity of their support structures, normally being unusable above 20 m/s, which means that during very strong winds with an enormous energy content, it is impossible to harness said energy.

Another significant problem that characterises these devices is the little use made of the area swept by the wind, requiring a large number of wind power generators to be used that have to be spaced out, with the consequent high land occupation factor. It is also noteworthy that existing wind power generators cause an enormous visual impact and ecological damage to birds due to the movement of their rotors.

Attempts have been made to design other devices that improve this situation. For example Patent 9402119 "*Wind power machine with three generators applicable for the production of electricity*" describes a device with a single rotor that moves three alternators by means of mechanical gears, in an attempt to improve its energy performance and minimise, although only slightly, the visual impact.

We can also find wind power generators such as that claimed in US Patent 4245958 *"Vertical axis wind turbine",* formed by multiple generators on one single, common vertical axis with horizontally disposed rotors, that has the drawback of using a type of rotor with a low performance, especially at high wind speeds.

Other types of devices are of the kind described in Patent 99954066 " *Wind power generator with oblique blades",* although they have the drawback that they are not stackable and furthermore they are designed for mast mounting which means that they still have a great visual impact.

Likewise, Patent W003029647 *"Transformation of wind power"* presents a pyramidal structure with multiple similar horizontal-axis generators that are vertically disposed, designed principally to pump water and which have the drawback of being a highly complex device to install, with a high economic cost and a very high visual and ecological impact, as well as having a reduced energy yield.

Finally, it is noteworthy that all of these types of wind power generators have the added problem that their operation and performance is only designed in one position, normally vertical, which limits, to a great extent, their adaptation to different locations and terrains.

To resolve the current problems in relation to the problem of wind power generation, the modular wind power generator that is the object of the present invention has been designed, being formed by one or several linear groups of a plurality of independent wind power generator modules which are joined in a coaxial manner, that can be disposed horizontally, vertically or in any intermediate position.

Transformation of wind power into mechanical power is carried out by means of fan-type turbines disposed in each of the modules. These turbines are driven by the wind and each of them transmits its rotational movement to the following module by means of a connecting piece such that the mechanical energy generated at the end of the device corresponds to the sum of the energies generated by the different modules.

The mechanical energy generated by the device may be used for its transformation into electricity by means of an alternator or directly to drive other machines with its movement.

Each of the modules that form the device has an air flow control system in the form of an adjustable pivot gate. All of the gates can be actuated together by means of a system of connecting rods.

Each one of the modules that the wind power generator includes is formed by the attachment of a turbine sub-module and a gate sub-module, adopting a structure with a rectangular ground plan and reduced height in relation to the other dimensions.

The turbine sub-module comprises the turbine or rotor, of the multi-blade type, housed in the body or casing of the turbine and supported by its central shaft by a support cross member on either side and the necessary bearings.

The gate sub-module, intended for diverting the wind flow in the different modules in order to be able to adjust the rotation speed, is formed by the gate itself that has a central opening enabling the central drive shafts or connection shafts of the different modules to pass through, housed in a gate box or casing, that is provided with its own rotation shaft and the corresponding stops which limit its movement, integrated in the side covers of the gate box. Mounted at the ends of the gate is a U-shaped piece with a screwed attachment system that is for the attachment of the coupling rods of the different gates of the device and for their joint adjustment.

Each one of these sub-modules is, in itself, an independent mechanical unit and can be packed and transported separately from the rest.

All of the previously described modular units are mounted on a main chassis that constitutes the main frame of the wind power generator and that, depending on the location and specific design of the machine site, has to be adapted to the terrain or to the support of the same.

This main chassis includes the support of the central shaft with a layout of holes, supports and strips suitable for fitting the rolling systems of the central shaft, the brake system and the intermediate drive shaft. The central shaft couples the turbine drive to the power system or electrical alternator, incorporating in its central part a plate for the coupling of the brake drum. The brake system is formed by a drum-shoe type brake mechanism automatically actuated by an auxiliary electrical unit. The intermediate shaft is only used to mount a set of pulleys to vary the number of revolutions in an intermediate stage in the drive unit from the central shaft to the alternator shaft, by means of the appropriate drive belts.

The main chassis also supports the connecting rod adjuster, consisting of an electrical system, automatically actuated, that is intended for varying the angle of the gates of the modules to, in this way, achieve a uniform speed in the transmission of power to the alternator.

The set of modules that form the wind power generator can adopt a layout that is vertical, horizontal or any intermediate angle, depending on the requirements of the particular installation in which it is included or depending on the lie of the land. Its operation and performance is the same regardless of the position adopted. For this purpose it is supported by a main chassis or support structure that will allow it to adopt said vertical or horizontal position or any intermediate angle chosen, being foreseen, in an alternative embodiment, the coupling of a plurality of module sets forming a matrix structure in the form of a plurality of rows and a plurality of columns of these modules.

The modular wind power generator that is disclosed, offers numerous advantages over the systems that are currently available, the most significant of these being that, because the whole of the system is surrounded by a rigid, strong casing, there is no limit to operation with respect to wind speed, allowing it to operate with much higher wind speeds than currently existing generators, providing a solution to harnessing the energy of these types of winds.

Another important advantage that differentiates the suggested system from the wind power generators that currently exist in the market is the maximum use of the swept area, since with the rectangular modular layout there is the possibility of placing devices back to back to form static, monolithic structures that house all of the moving systems inside them.

It is to be noted that an important advantage is offered by the modular layout, allowing the creation of wind power generators with a structure that is horizontal, vertical, sloping or in the form of a matrix, using practically the same elements.

It is very important to underline the significant advantage of the wind power generator being able to adopt a position that is vertical, horizontal or any intermediate angle, without operating problems or variations in performance since it enables an optimum adaptation to any wind power harnessing environment.

Also to be mentioned is the undeniable additional advantage of having much less of a visual impact than existing wind power generators, since the movement of the rotors is not perceived because they are fitted inside, and of requiring much less space than current wind power generators.

It is important to highlight the advantage provided by its turbine structure protected by a casing, both in terms of structural stiffness and by providing, by means of an optional net, simple protection against intrusions by birds or other animals that could damage the wind power generator, minimising in this way its ecological impact.

Finally, mention must be made to the important advantage of the division of the wind power generator into identical, small modules, both for their manufacture, since it allows them to be made economically in large production runs, and for their transport, it being much more simple than in the case of conventional wind power generator parts, or for their installation, since much less labour and less civil works are required, all of which results in a much higher cost-effectiveness.

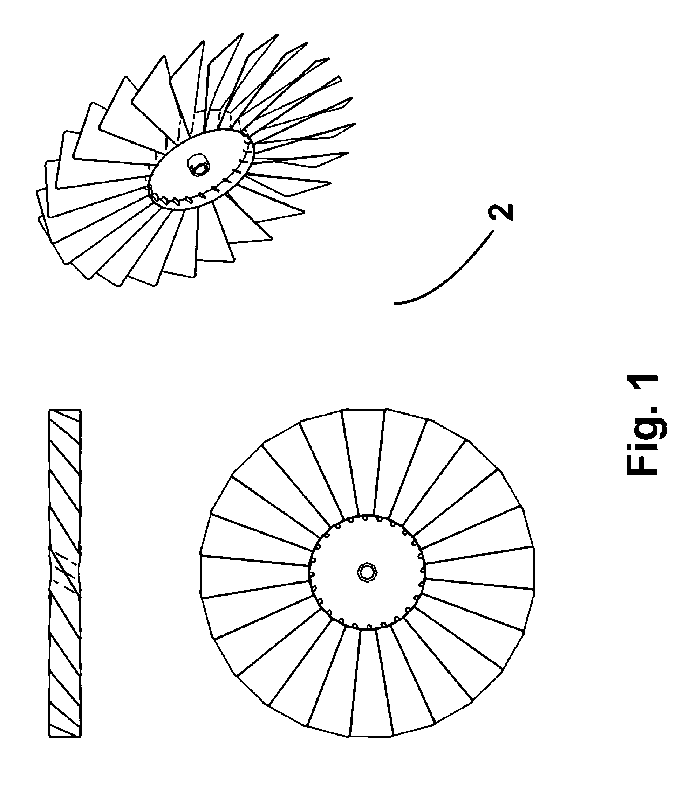

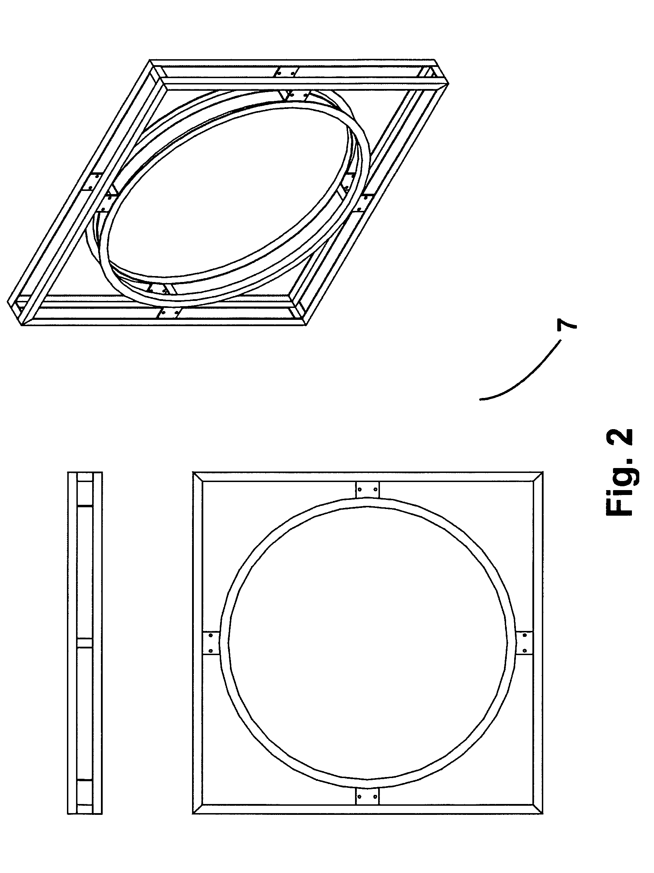

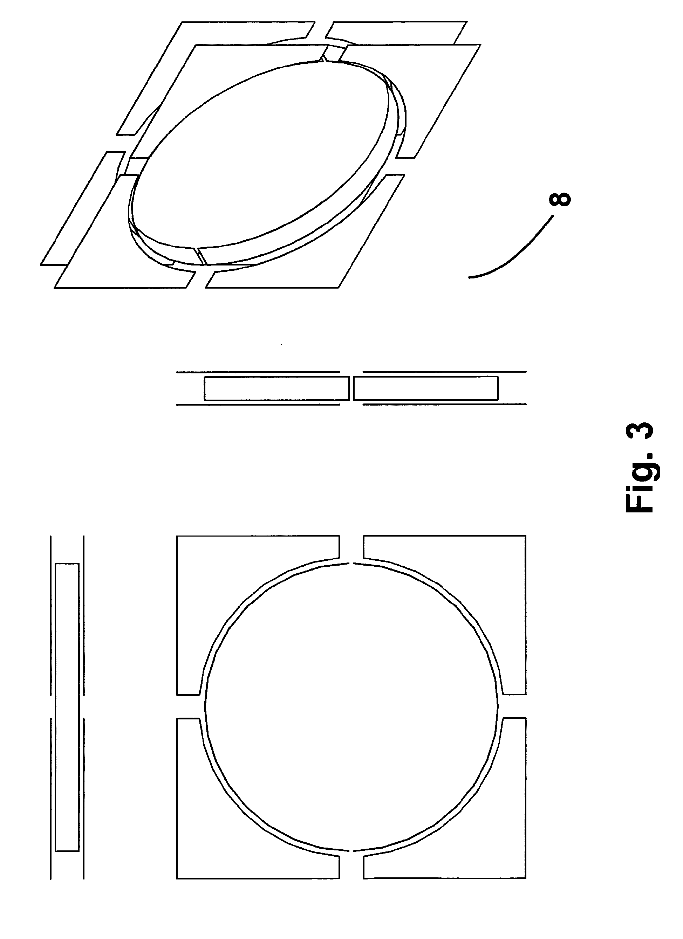

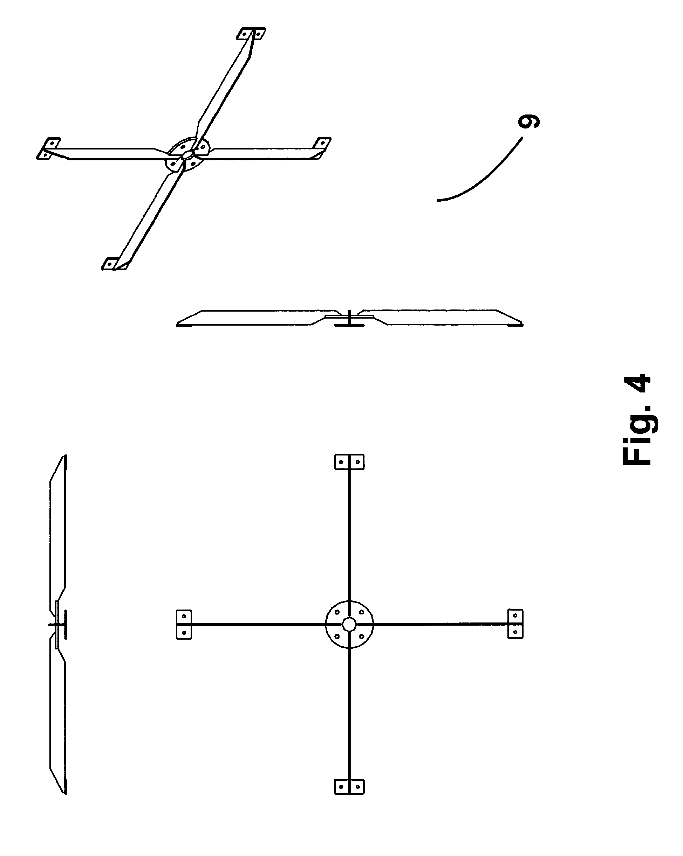

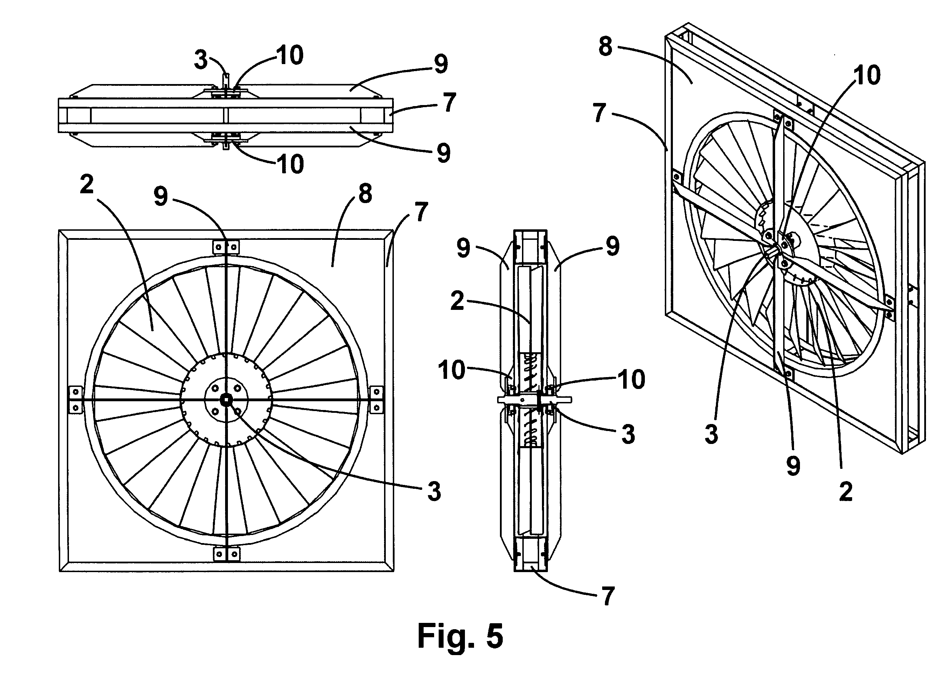

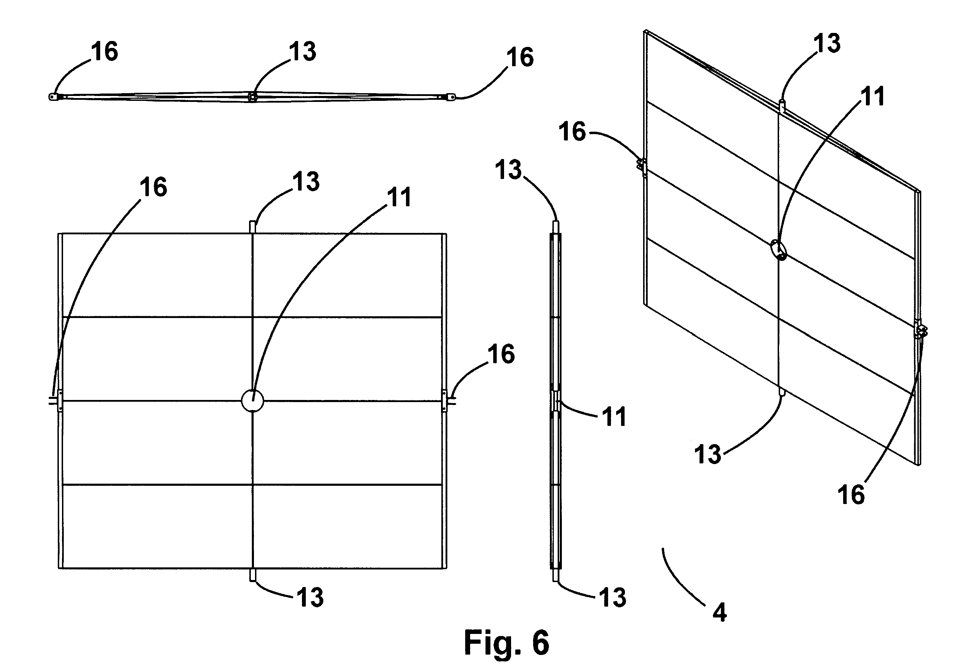

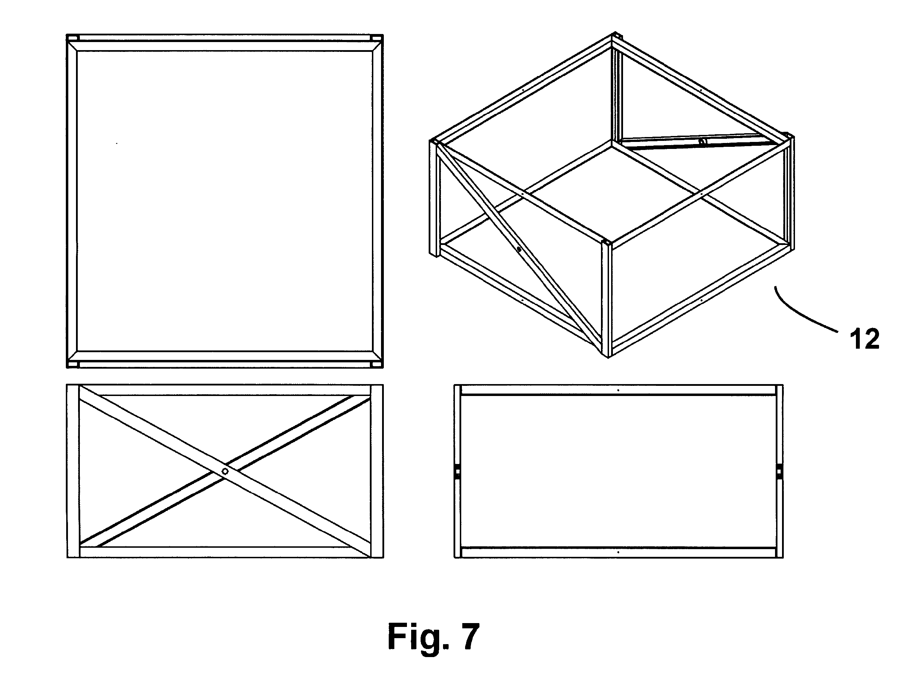

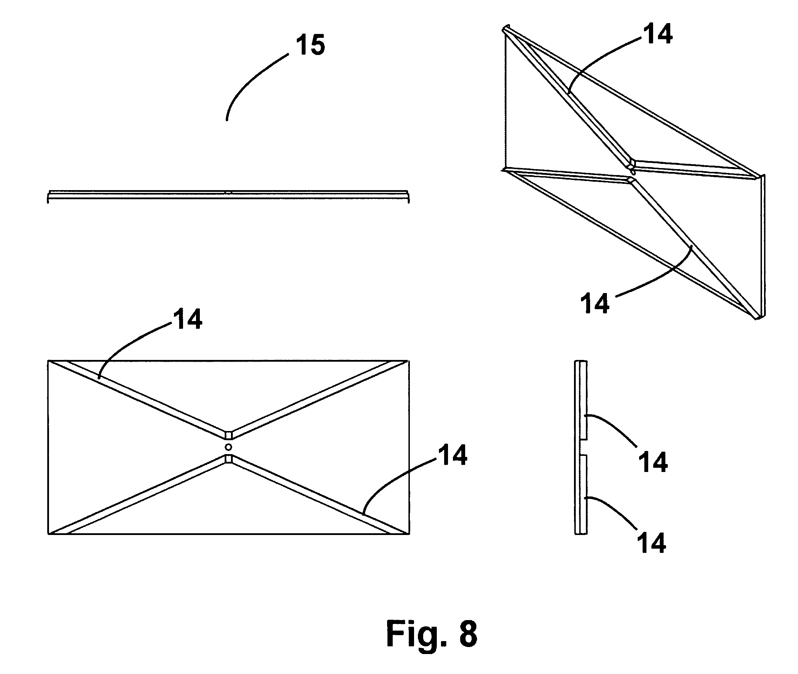

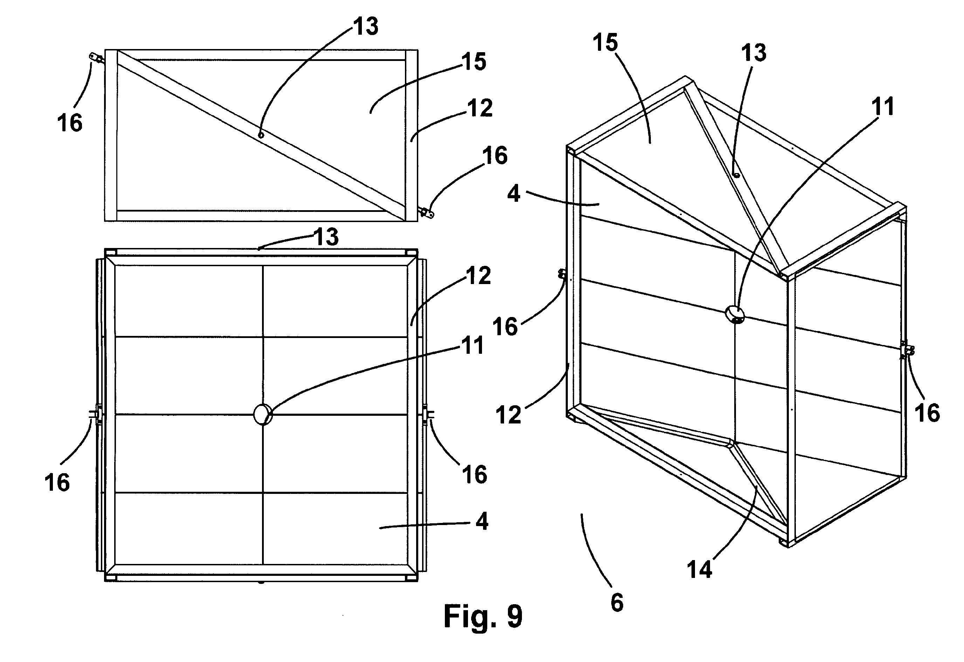

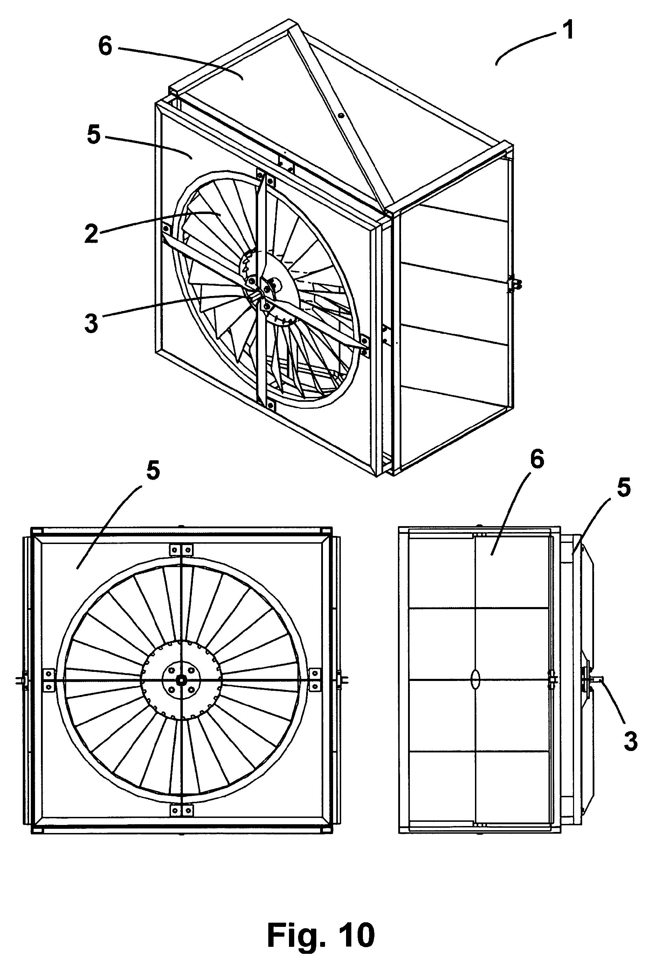

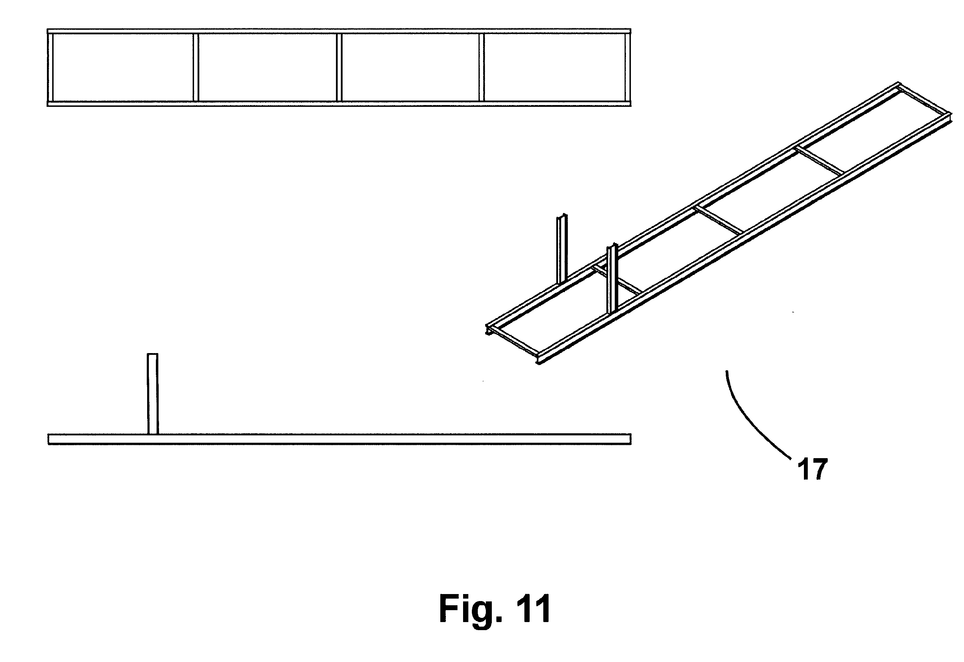

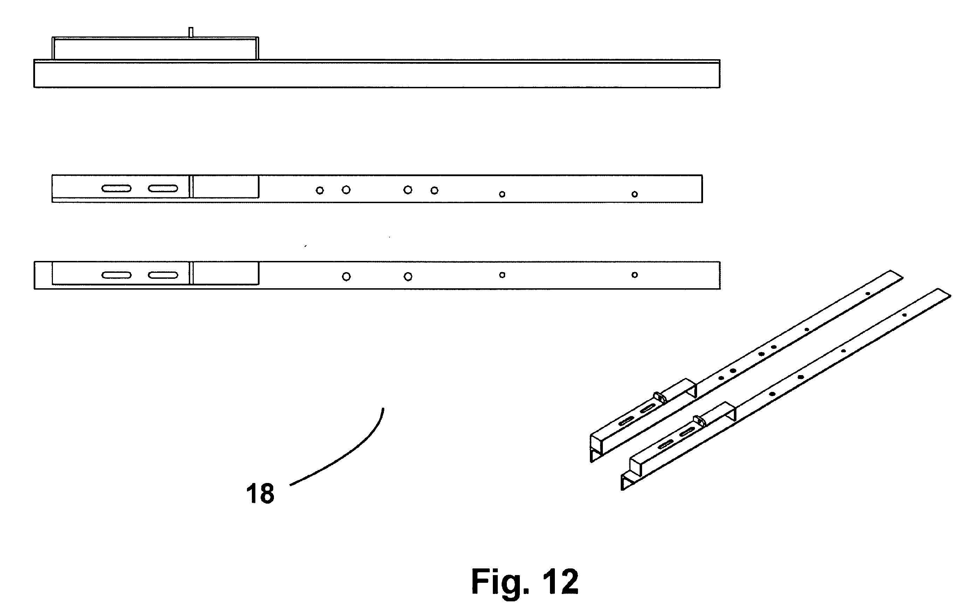

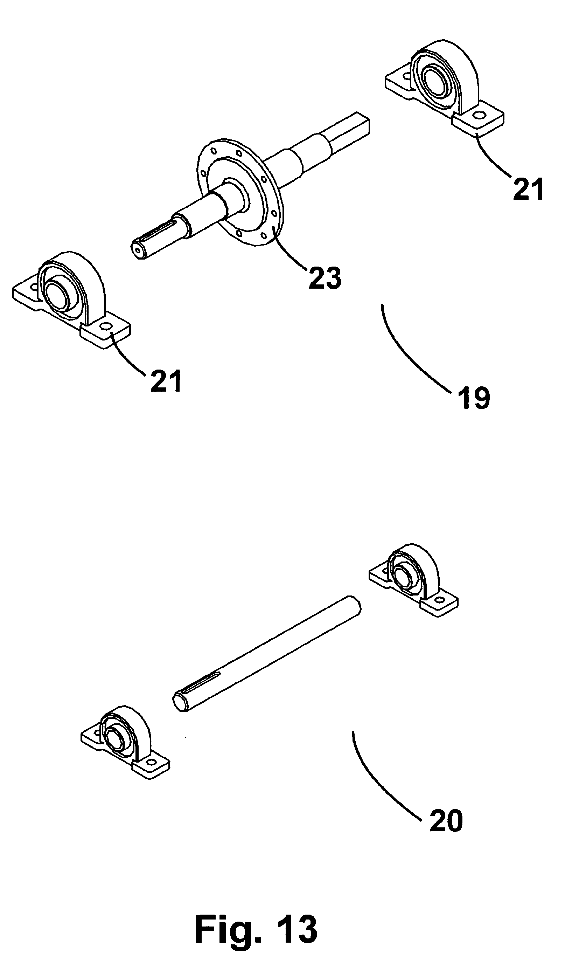

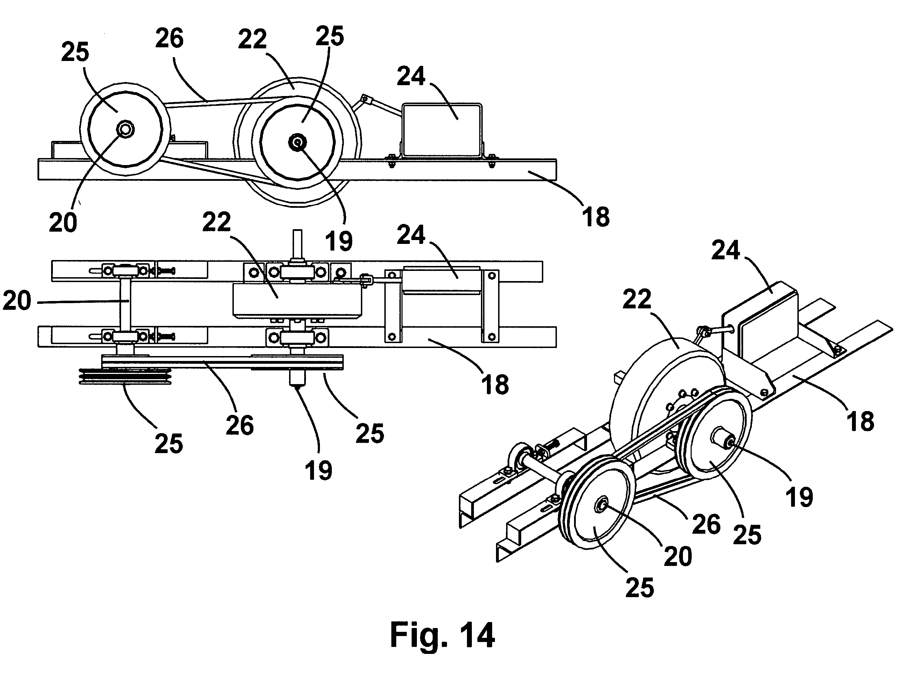

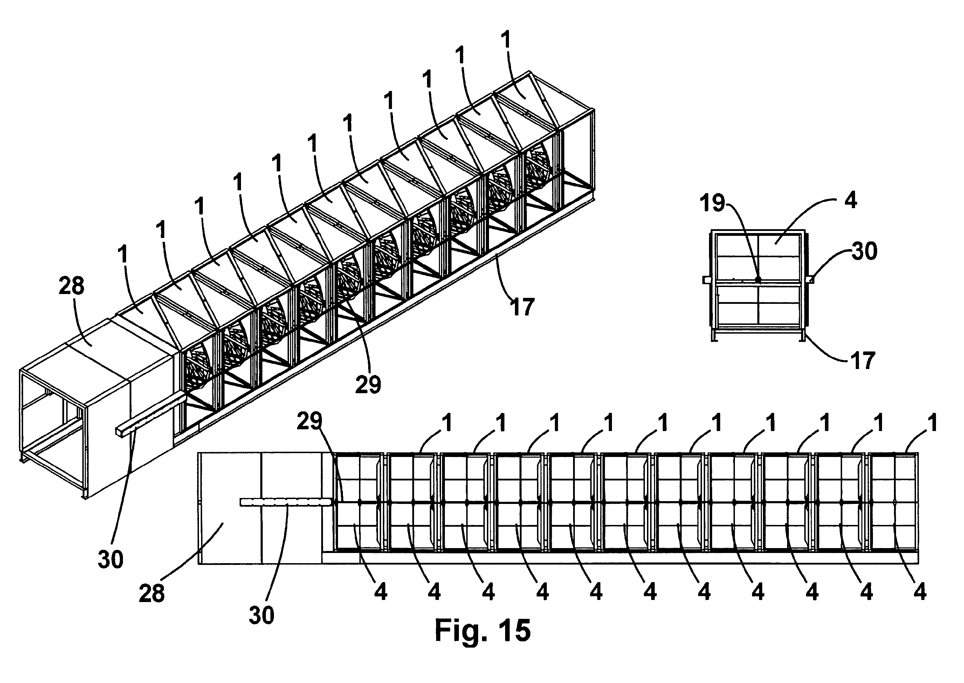

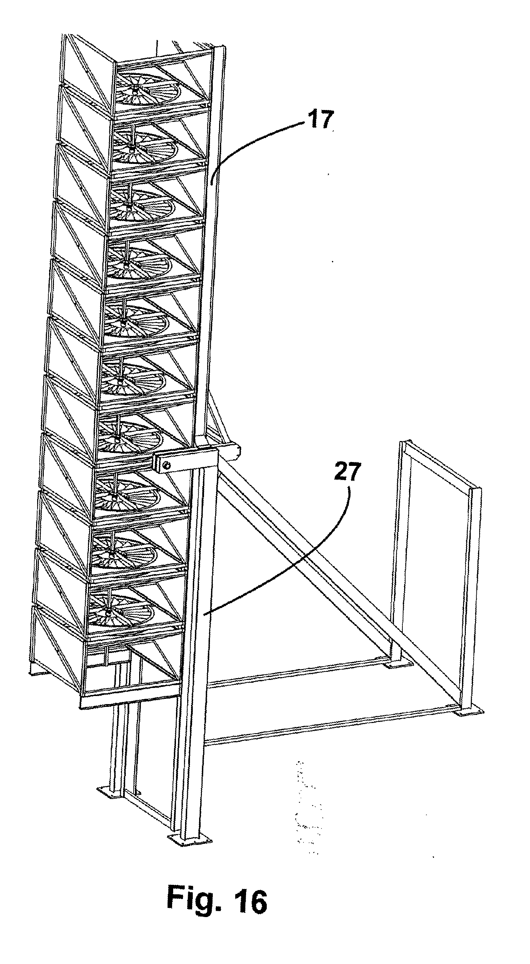

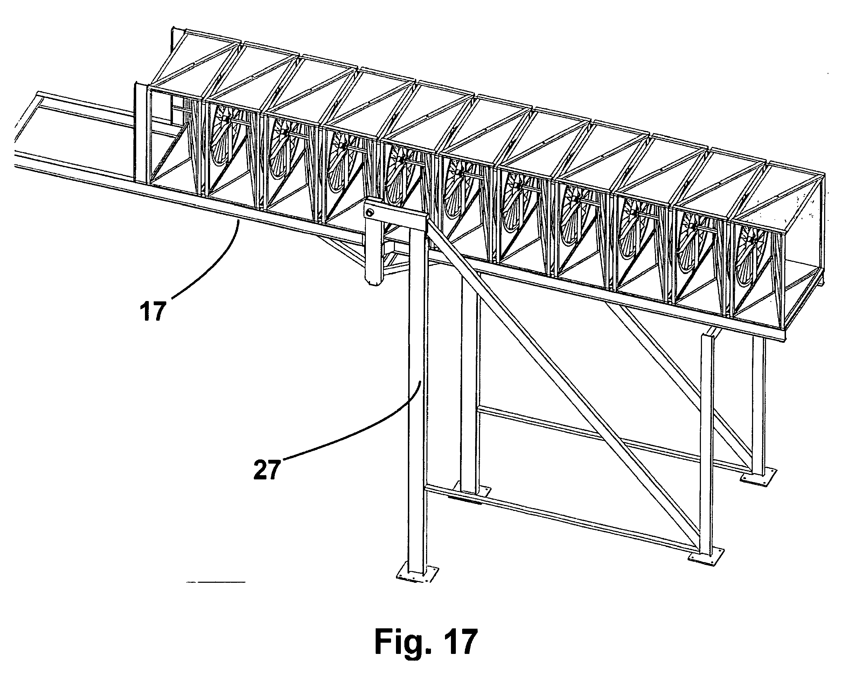

In order to better understand the object of the present invention, a preferential practical embodiment of a modular wind power generator and of its integrating modules has been portrayed in the attached drawing.

In said drawing figure -1- shows several views of the turbine or rotor, which is an integral part of the turbine sub-module.
Figure -2- shows different views of the structure of the turbine casing, which is an integral part of the turbine sub-module.
Figure -3- shows different views of the closing plates of the turbine casing, which is an integral part of the turbine sub-module.
Figure -4- shows different views of the support cross member, which is an integral part of the turbine sub-module.
Figure -5- shows different views of the complete turbine sub-module.
Figure -6- shows different views of the gate, forming an integral part of the gate sub-module.
Figure -7- shows different views of the box or casing structure of the gate, forming an integral part of the gate sub-module.
Figure -8- shows different views of the side cover of the gate box or casing, with the stops that limit movement, forming an integral part of the gate sub-module.
Figure -9- shows different views of the complete gate sub-module.
Figure -10- shows different views of a complete module, formed by the turbine sub-module plus the gate sub-module, both already assembled.
Figure -11- shows different views of the main chassis.
Figure -12- shows different views of the central shaft support.
Figure -13- shows a view of the central and intermediate shafts.
Figure -14- shows different views of the mechanical assembly of the central shaft and brake mechanism.
Figure -15- shows different views of a complete, mounted modular wind power generator unit, with the mechanism box installed at one end.
Figure -16- shows different views of a complete, mounted modular wind power generator unit, installed with an example of a chassis for its vertical attachment, without the mechanism box nor the mechanisms themselves installed, in order to facilitate the view.
Figure -17- shows different views of a complete, mounted wind power generator unit, installed with an example of a chassis for its horizontal attachment, without the mechanism box nor the mechanisms themselves installed, in order to facilitate the view.

The modular wind power generator that is the object of the present invention is basically formed, as can be seen from the annexed drawing, by a linear group of a plurality of independent wind power generator modules (1), joined together in a coaxial manner, that can be disposed horizontally, vertically or in any intermediate position.

Transformation of wind power into mechanical power is carried out by means of fan-type turbines (2) disposed in each of the modules (1). These turbines (2) are driven by the wind and each of them transmits its rotational movement to the following module (1) by means of a central shaft (3), these being connected to each other by the appropriate connecting pieces such that the mechanical energy generated at the end of the device corresponds to the sum of the energies generated by the different modules (1).

Each one of the modules (1) that forms the device has an air flow control system in the form of an adjustable pivot gate (4). All of the gates (4) can be actuated together by means of connecting rods.

Each one of the modules (1) that forms the wind power generator is formed by the attachment of a turbine sub-module (5) and a gate sub-module (6), adopting a structure with a rectangular ground plan and reduced height in relation to the other dimensions.

The turbine sub-module (5) comprises the turbine (2) or rotor, of the multi-blade type, housed in the body or casing (7,8) of the turbine (2) and supported by its central shaft (3) by a support cross member (9) on either side, and the necessary bearings (10). The turbine (2) or rotor is preferably of the multi-blade type, in which the angle of the blades and their curvature is designed to optimise energy harnessing conditions. The body or casing (7,8) of the turbine (2) is formed by a support structure (7), preferably metal, with closing lids or plates (8) intended for blocking the passage of air through any place other than the turbine (2).

The gate sub-module (6), intended for diverting the wind flow in the different modules (1) in order to be able to adjust the rotation speed, is formed by the gate (4) itself that has a central opening (11) to enable the central shafts (3) for driving or connecting the different modules to pass through, housed in a gate (12) box or casing, that is provided with its own rotation shaft (13) and the corresponding stops (14) which limit, in an angular manner, its movement, integrated in the side covers (15) of the gate box. Mounted at the ends of the gate are U-shaped pieces (16) for the purpose of attaching the coupling rods of the different gates (4) of the device and for their joint adjustment.

Each one of these sub-modules (5,6) is in itself, an independent mechanical unit and can be packed and transported separately from the rest.

All of the previously described modules (1) are mounted on a main chassis (17) that constitutes the main frame of the wind power generator and that, depending on the location and specific design of the machine site, has to be adapted to the terrain or to the support of the same.

This main chassis (17) includes the support (18) of the central shaft (19) and of the intermediate shaft (20) with a layout of holes, supports and strips suitable for fitting the rolling systems (21) of the central shaft (19), the brake system (22) and the intermediate drive shaft (20). The central shaft (19) couples the turbine drive to the power system or external electrical alternator, incorporating in its central part a plate (23) for the coupling of the brake system (22), which is preferably formed by a drum-shoe type mechanism automatically actuated by an auxiliary electrical unit (24). The intermediate shaft (20) is only used to mount a set of pulleys (25) to vary the number of revolutions, in an intermediate stage in the drive unit, from the central shaft (19) to the external alternator shaft, by means of the appropriate drive belts (26).

Also supported by the main chassis (17) is a connecting rod adjuster (29), consisting of an automatically actuated electrical system (30) that is intended to vary the angle of the gates (4) of the modules (1), in this way achieving a uniform speed in the transmission of power to the alternator.

All of these mechanical and braking systems are supported at one end of the main chassis (17), being covered by a mechanisms casing (28) or cover for their protection and for safety.

The set of modules (1) that form the wind power generator can adopt a layout that is vertical, horizontal or any intermediate angle, depending on the requirements of the particular installation in which it is included and depending on the lie of the land, its operation and performance being the same regardless of the position adopted. For this purpose it is supported by the main chassis (17) to which the necessary support structures (27) will be added, allowing it to adopt said chosen layout that is vertical, horizontal or any intermediate angle.

A detailed description of the rest of the features of the device presented or of its component elements is purposely omitted, given that it is not considered that the rest of the features are the object of any claim.

Having described the nature of the present invention in sufficient detail, in addition to a means for putting it into practice, all that remains to be added is that its description is not restrictive, and that some variations in materials, shapes or sizes can be made provided that said variations do not alter the essential nature of the characteristics claimed below.

## Claims

1. Modular wind power generator of the type used to generate mechanical or electrical energy from wind, **characterised in that** it is formed by one or more linear groups comprising a plurality of separate wind generator modules (1), joined together in a coaxial manner, provided with fan-type turbines (2) disposed in each one of the modules (1) that are actuated by the wind, each one of them transmitting its rotational movement to the following module (1) by means of a central shaft (3), being connected one to the other by means of the opportune connecting pieces, such that the mechanical energy generated at the end of the device corresponds to the sum of the energies generated by the different modules (1), its operation and performance being the same regardless of the angle that it adopts in relation to the ground.

2. Modular wind power generator, according to the preceding claim, wherein each of the modules (1) that form the device has an air flow control system comprising an adjustable pivot gate (4), all of said gates (4) being able to be operated together by means of connecting rods (29).

3. Modular wind power generator, according to the preceding claims, wherein each of the modules (1) that the wind power generator includes, is formed by the union of a turbine sub-module (5), intended for transforming the passage of the wind into a rotational movement, and a gate sub-module (6), intended for diverting the wind flow in the different modules (1) in order to be able to adjust the rotation speed of the turbine (2), adopting a structure with a rectangular ground plan and a reduced height in relation to the other dimensions.

4. Modular wind power generator, according to the preceding claims, wherein the turbine sub-module (5) is formed by the turbine (2) or rotor, of the multi-blade type, housed in a body or casing (7,8) of the turbine (2) and supported by its central shaft (3) by means of a support cross member (9) on either side and the necessary bearings (10), said turbine (2) or rotor being preferably of the multi-blade type, and the body or casing (7,8) of the turbine (2) being composed of a support structure (7), preferably metallic with covers or closing plates (8) intended for blocking the passage of air through any other place other than the turbine (2).

5. Modular wind power generator, according to the preceding claims, wherein the gate sub-module (6) is formed by the gate (4) itself, having a central opening (11) enabling the central shafts (3) for driving or connecting the modules to pass through, housed in a gate box (12) or casing, being provided with its own rotation shaft (13) and the corresponding stops (14) which limit its movement in an angular manner, integrated in the side covers (15) of the gate box, there being mounted on the ends of the gate "U"-shaped pieces (16) that are for the attachment of the coupling rods of the different gates(4) of the device, for their joint adjustment.

6. Modular wind power generator, according to the preceding claims, wherein the modules (1) are mounted on a main chassis (17) that constitutes the main frame of the wind power generator and that, depending on the location and specific design of the machine site, must adapt to the terrain or to the support of the same.

7. Modular wind power generator, according to the preceding claims, wherein the main chassis (17) includes a support (18) with a central shaft (19) and an intermediate shaft (20) with a layout of holes, supports and strips suitable for fitting the rolling systems (21) of the central shaft (19), the brake system (22) and the intermediate drive shaft (20).

8. Modular wind power generator, according to the preceding claims, wherein the central shaft (19) couples the turbine (2) drive to the power system or external electrical alternator, incorporating in its central part a plate (23) for the coupling of a brake system (22) preferably formed by a drum-shoe type mechanism that is automatically actuated by an auxiliary electrical unit (24).

9. Modular wind power generator, according to the preceding claims, wherein the intermediate shaft (20) is used to mount a set of pulleys (25) to vary the number of revolutions, in an intermediate stage in the drive unit, from the central shaft (19) to the shaft of an external alternator, by means of the necessary drive belts (26).

10. Modular wind power generator, according to the preceding claims, wherein the main chassis (17) also supports the connecting rod adjuster (29) that consists of an electrical system (30), automatically actuated, that varies the angle of the gates (4) of the modules (1) to achieve, in this way, a uniform speed in the transmission of power to the alternator.

11. Modular wind power generator, according to the preceding claims, wherein the set of modules (1) that forms the wind power generator can adopt a layout that is horizontal, vertical or any intermediate position, depending on the requirements of the particular installation in which it is included or depending on the lie of the land, its operation and performance being the same regardless of the position adopted, and, for this purpose, being supported by means of the main chassis (17) to which the necessary support structures (27) will be added, allowing it to adopt a layout that is horizontal, vertical or any intermediate position.
